# EUROPEAN PATENT APPLICATION

(11) **EP 2 106 131 A2**
(43) Date of publication of application: **30.09.2009**
(21) Application number: 09003028.9
(22) Date of filing: 03.03.2009
(51) Int. Cl.: H04N 5/44

(54) **Progressive scan conversion device and method for performing progressive scan conversion**

(30) Priority: 26.03.2008 JP 2008081450
(71) Applicant: Kabushiki Kaisha Toshiba, Minato-ku Tokyo (JP)
(72) Inventor: Yamauchi, Himio, Tokyo (JP)
(74) Representative: HOFFMANN EITLE

(57) **Abstract**

A progressive scan conversion device includes a motion detector configured to determine to be closer to still image by lowering the sensitivity of detecting the motion when detecting any motion between fields or between frames of pixel with a video data belonging to different GOP based on a GOP change point information output by a decoder than when detecting any motion between fields or between frames of pixel with the video data belonging to the same GOP. Thereby, since the sensitivity of detecting the motion at a GOP change point is lower, it is possible to prevent a disorder in the output image of progressive scan conversion at the GOP change point and produce an excellent progressive scan conversion image.

## Description

### CROSS REFERENCE TO RELATED APPLICATION(S)

The present disclosure relates to the subject matters contained in Japanese Patent Application No. 2008-081450 filed on March 26, 2008, which are incorporated herein by reference in its entirety.

### FIELD

The present invention relates to a progressive scan conversion device and a method for performing progressive scan conversion of motion adaptive type.

### BACKGROUND

The image encoding and decoding are widely utilized implementing the MPEG-2 or MPEG-4 AVC (H.264) format. For example, there is proposed a technique in which an image encoding device with the MPEG makes a determination for still or moving area between I frame (picture) before a GOP (Group of Picture) and I frame currently processed for each macroblock, in which the code of the I frame before one GOP is read and encoded as the code in a still area in the case of a macroblock determined as the still area, while a motion compensation prediction is performed in the case of a P frame or B frame. An example of such technique is disclosed in JP-A-2000-287212.

However, when video data encoded by the MPEG-2 or MPEG-4 AVC is decoded and subjected to progressive scan conversion, there occurs a change in the image even with the still image, whereby a motion detection results to be determined as a motion image, possibly causing a disorder in the output image of progressive scan conversion. Such disorder in the image remarkably occurs in the image having especially high spatial frequency component. Therefore, there is a demand for a technique which is capable of suppressing disorder in the output image of progressive scan conversion from the image using the MPEG.

### SUMMARY

Therefore, one of objects of the invention is to provide a progressive scan conversion device and a method for performing progressive scan conversion capable of suppressing a disorder in the output image of progressive scan conversion from the image using the MPEG.

According to a first aspect of the present invention, there is provided a progressive scan conversion device including: a decoding module configured to decode a video data encoded by a video encoding method having a GOP structure; a GOP information output module configured to output information regarding a GOP to which the video data decoded by the decoding module belongs; a motion detection module configured to detect a motion between fields or between frames for each pixel with the video data decoded by the decoding module to output a motion detection signal indicating a degree of the motion to be in a range from a still picture determination to a motion picture determination; a still image interpolation pixel generation module configured to generate a still image interpolation pixel; a motion picture interpolation pixel generation module configured to generate a motion picture interpolation pixel; and an interpolation pixel mixture generation module configured to generate a mixture of the still image interpolation pixel and the motion picture interpolation pixel while increasing the ratio of the still image interpolation pixel as the degree of the motion indicated by the motion detection signal transitions toward the still picture determination and while increasing the ratio of the motion picture interpolation pixel as the degree of the motion indicated by the motion detection signal transitions toward the motion picture determination, wherein the motion detection module refers to the information output by the GOP information output module and outputs the motion detection signal indicating the degree of the motion more toward the still picture determination in a case where detecting the motion between fields or between frames of pixel for the video data belonging to different GOP than in a case where detecting the motion between fields or between frames of pixel for the video data belonging to the same GOP.

According to a second aspect of the present invention, there is provided a method for performing progressive scan conversion, the method including: decoding a video data encoded by a video encoding method having a GOP structure; outputting information regarding a GOP to which the decoded video data belongs; detecting a motion between fields or between frames for each pixel with the decoded video data to output a motion detection signal indicating a degree of the motion to be in a range from a still picture determination to a motion picture determination; generating a still image interpolation pixel; generating a motion picture interpolation pixel; generating a mixture of the still image interpolation pixel and the motion picture interpolation pixel while increasing the ratio of the still image interpolation pixel as the degree of the motion indicated by the motion detection signal transitions toward the still picture determination and while increasing the ratio of the motion picture interpolation pixel as the degree of the motion indicated by the motion detection signal transitions toward the motion picture determination; and outputting, by referring to the information regarding the GOP, the motion detection signal indicating the degree of the motion more toward the still picture determination in a case where detecting the motion between fields or between frames of pixel for the video data belonging to different GOP than in a case where detecting the motion between fields or between frames of pixel for the video data belonging to the same GOP.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.

Fig. 1 is a diagram showing a configuration of a progressive scan conversion device according to a first embodiment.

Fig. 2 is a diagram showing a configuration of a motion detector of Fig. 1.

Fig. 3 is a graphical view showing a relationship between the absolute value of difference between field datas and a motion determination signal.

Fig. 4 is a view showing a change point of GOP in a GOP structure.

Fig. 5 is a diagram showing a configuration of a progressive scan conversion device according to a second embodiment.

Fig. 6 is a diagram showing the configuration of a pull downpull down data detector of Fig. 5.

Fig. 7 is a view showing how to process a 2-3 pull down data of interlace scanning.

Fig. 8 is a diagram showing the configuration of an display device using the progressive scan conversion device according to the embodiment.

### DETAILED DESCRIPTION OF THE EMBODIMENTS

An embodiment of the invention will be described below with reference to the drawings.

### First Embodiment

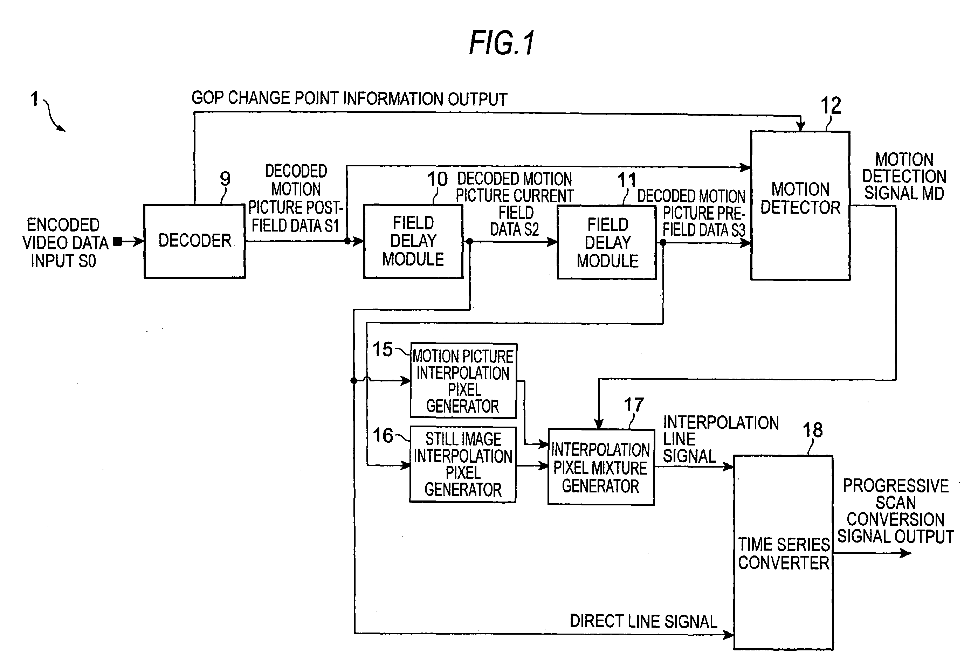

Fig. 1 is a diagram showing a configuration of a progressive scan conversion device according to a first embodiment. The progressive scan conversion device 1 according to the first embodiment includes a decoder 9, the field delay modules 10 and 11, a motion detector 12, a motion picture interpolation pixel generator 15, a still image interpolation pixel generator 16, an interpolation pixel mixture generator 17, and a time series converter 18.

The decoder 9, which serves as a decoding module and a GOP information output module), decodes a encoded video data input S0 encoded by an MPEG method. Also, the decoder 9 outputs information regarding a change point in the GOP to which a decoded motion picture post-field data S1 of decoding the encoded video data input S0 belongs. The decoded motion picture post-field data S1 is output to the field delay module 10 and the motion detector 12.

The field delay module 10 delays the decoded motion picture post-field data S1 by one field. More specifically, the input decoded motion picture post-field data S1 is delayed by one field and output as the decoded motion picture current field data S2 to the field delay module 11. The decoded motion picture current field data S2 is further output to the motion picture interpolation pixel generator 15 and the time series converter 18.

The field delay module 11 delays the input decoded motion picture current field data S2 by one field. More specifically, the decoded motion picture current field data S2 output from the field delay module 10 is delayed by one field and output as the decoded motion picture pre-field data S3 to the motion detector 12. The decoded motion picture pre-field data S3 is further output to the still image interpolation pixel generator 16.

The motion detector (motion detection module) 12 detects a motion in one frame for each pixel. The motion detector 12 outputs a signal detected based on the decoded motion picture post-field data S1 and the decoded motion picture pre-field data S3 as a motion detection signal MD to the interpolation pixel mixture generator 17.

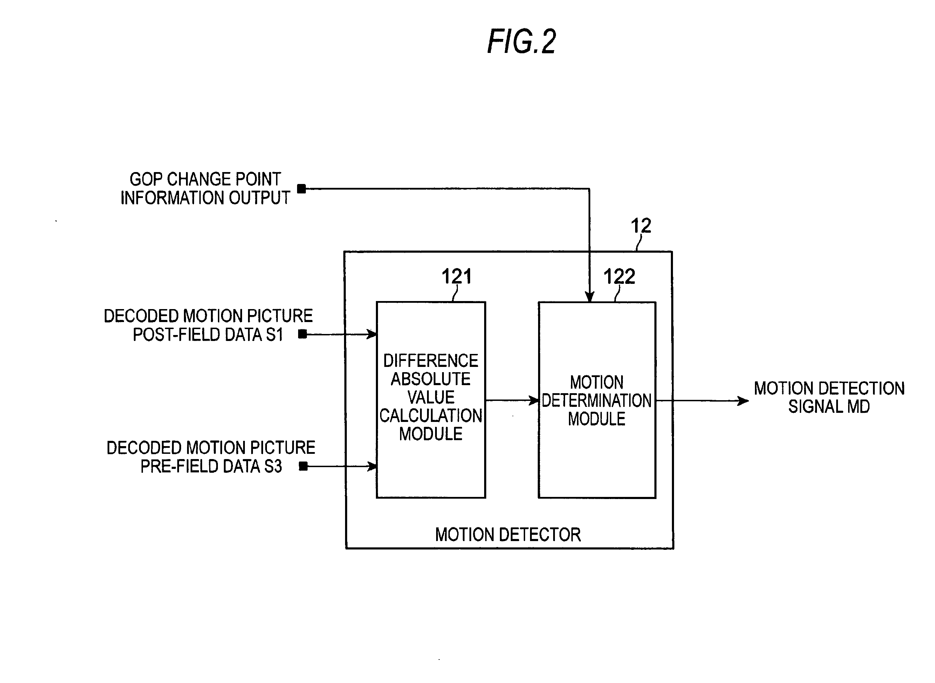

Fig. 2 shows more specifically the configuration of the motion detector 12. The motion detector 12 includes a difference absolute value calculation module 121 and a motion determination module 122, as shown in Fig. 2. The difference absolute value calculation module 121 calculates the absolute value of a difference between the decoded motion picture post-field data S1 and the decoded motion picture pre-field data S3. The absolute value of a difference between the decoded motion picture post-field data S1 and the decoded motion picture pre-field data S3 is output to the motion determination module 122.

The motion determination module 122 detects the motion in one frame for each pixel, based on the absolute value of a difference between the decoded motion picture post-field data S1 and the decoded motion picture pre-field data S3 calculated by the difference absolute value calculation module 121 and the GOP change point information output from the decoder 9. The motion determination module 122 may detect the motion in one field, not the motion in one frame.

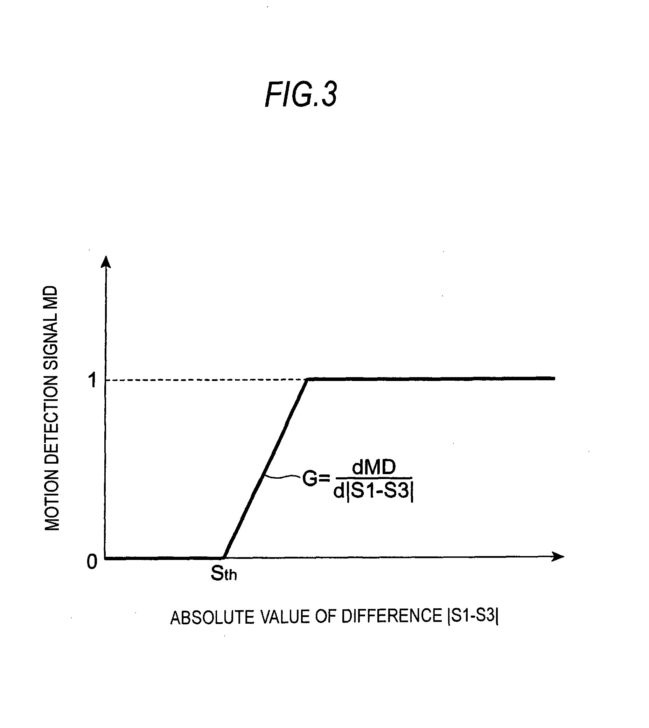

Fig. 3 is a graphical view showing the relationship between the absolute value of difference between field data and the motion determination signal. The motion detection signal MD gives a motion picture determination as the value is larger, or a still image determination as the value is smaller, and is a function of the absolute value of difference |S1-S3| between the decoded motion picture post-field data S1 and the decoded motion picture pre-field data S3, taking a value in 0≤ motion detection signal MD ≤1, as shown in Fig. 3.

The motion detection signal MD is equal to 0 until the absolute value of difference |S1-S3| exceeds a threshold Sₜₕ. Also, the motion detection signal MD increases linearly at a gradient G = dMD/d|S1-S3| if the absolute value of difference |S1-S3| exceeds the threshold Sₜₕ. Further, the motion detection signal MD becomes equal to 1 as the absolute value of difference |S1-S3| increases, and saturated, whereby the motion detection signal MD is kept to be MD = 1.

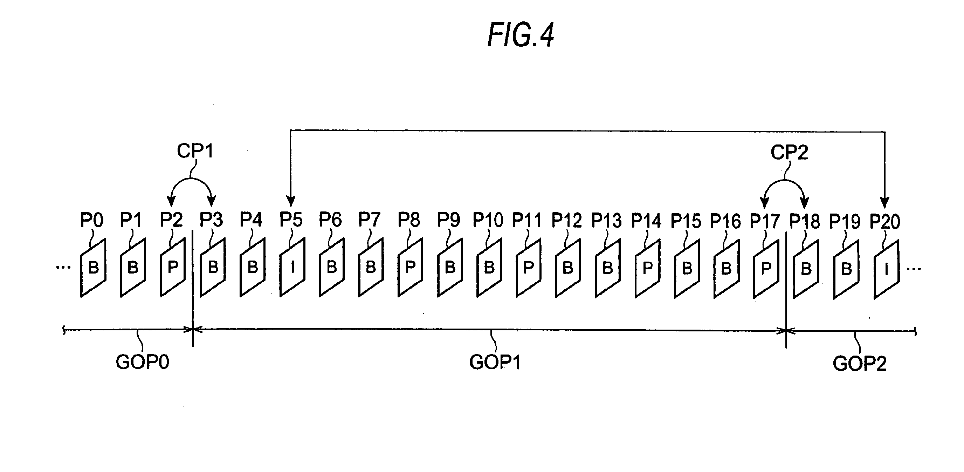

In this embodiment, when detecting the motion of pixel between frames with a video data belonging to a different GOP, based on the GOP change point information output from the decoder 9 in a GOP structure as shown in Fig. 4, the motion determination module 122 increases the threshold Sₜₕ for the absolute value of difference |S1-S3| or decreases the gradient G=dMD/d|S1-S3| for the absolute value of difference |S1-S3|.

In an example of Fig. 4, a picture P2 that is P picture (predictive encoded picture) belonging to GOP0 and a picture P3 that is B picture (bidirectionally predictive encoded picture) belonging to GOP1 have a GOP change point CP1 between them. Also, a picture P17 that is P picture belonging to GOP1 and a picture P18 that is B picture belonging to GOP2 have a GOP change point CP2 between them. Accordingly, when detecting the motion between pictures P2 to P3 or pictures P17 to P18, the motion determination module 122 increases the threshold Sₜₕ, or decreases the gradient G=dMD/d|S1-S3|.

That is, the motion determination module 122 determines to be closer to the still image by lowering the sensitivity of detecting the motion when detecting any motion between fields or between frames of pixel with the video data belonging to the different GOP than when detecting any motion between fields or between frames of pixel with the video data belonging to the same GOP.

In this case, as a difference in the quantization scale value between I pictures (intra encoded pictures) of pixel with the video data belonging to the adjacent GOP is larger, the motion determination module 122 may determine to be closer to the still image by increasing the threshold Sₜₕ or decreasing the gradient G=dMD/d|S1-S3| to lower the sensitivity of detecting the motion, as shown in Fig. 4.

Returning to Fig. 1, the motion picture interpolation pixel generator (motion picture interpolation pixel generation module) 15 generates the motion picture interpolation pixel from any of the decoded motion picture current field data S2, the decoded motion picture pre-field data S3 and the decoded motion picture post-field data S1. In this embodiment, the motion picture interpolation pixel generator 15 generates the motion picture interpolation pixel from the decoded motion picture current field data S2 through the intra-field interpolation. The motion picture interpolation pixel generator 15 outputs the generated motion picture interpolation pixel to the interpolation pixel mixture generator 17. The motion picture interpolation pixel generator 15 may generate the motion picture interpolation pixel further using the pre-field and the post-field with motion compensation.

The still image interpolation pixel generator (still image interpolation pixel generation module) 16 generates the still image interpolation pixel from the decoded motion picture pre-field data S3 or the decoded motion picture post-field data S1. In this embodiment, the still image interpolation pixel generator 16 outputs the pixel of the decoded motion picture pre-field data S3 at the same spatial position as the interpolation pixel as the still image interpolation pixel to the interpolation pixel mixture generator 17. It should be noted that the still image interpolation pixel generator 16 may use the decoded motion picture post-field data S1 or both the decoded motion picture pre-field data S3 and the decoded motion picture post-field data S1.

The interpolation pixel mixture generator (interpolation pixel mixture generation module) 17 mixes the still image interpolation pixel and the motion picture interpolation pixel by increasing the ratio of still image interpolation pixel as the output of the motion detector 12 transitions toward the still picture determination side, and increasing the ratio of motion picture interpolation pixel as the output of the motion detector 12 transitions toward the motion picture determination side.

If the motion picture determination is made as the value of the motion detection signal MD is larger, or still image determination is made as it is smaller, as described above, the interpolation pixel mixture generator 17 mixes the motion picture interpolation pixel and the still image interpolation pixel in accordance with the following expression.

Interpolation line signal = motion detection signal MD x motion picture interpolation pixel + (1 - motion detection signal MD) x still image interpolation pixel
where the motion detection signal MD satisfies 0≤ motion detection signal MD ≤1

The time series converter 18 outputs a progressive scan conversion signal, based on an interpolation line signal output from the interpolation pixel mixture generator 17 and a direct line signal that is the decoded motion picture current field data S2.

In this embodiment, the motion detector 12 determines to be closer to the still image by decreasing the sensitivity of detecting the motion when detecting any motion between fields or between frames of pixel with the video data belonging to the different GOP based on the GOP change point information output from the decoder 9 than when detecting any motion between fields or between frames of pixel with the video data belonging to the same GOP. More specifically, the motion determination module 122 of the motion detector 12 increases the threshold Sₜₕ for the absolute value of difference |S1-S3| or decreases the gradient G=dMD/d|S1-S3| for the absolute value of difference |S1-S3|, based on the GOP change point information output from the decoder 9.

In the conventional progressive scan conversion device, since there is a change in the image at the change point of GOP even with the still image, the motion detection result is moving determination, likely causing a disorder in the progressive scan conversion output image. On the other hand, in this embodiment, it is determined to be closer to the still image by decreasing the sensitivity of detecting the motion at the change point of GOP, thereby preventing a disorder in the progressive scan conversion output image at the change point of GOP, and producing the excellent progressive scan conversion image.

Particularly, in this embodiment, as a difference in the quantization scale value between I pictures of pixel with the video data belonging to adjacent GOP is larger, the motion determination module 122 may determine to be closer to the still image by making the threshold Sₜₕ for the absolute value of difference |S1-S3| larger or making the gradient G=dMD/d|S1-S3| for the absolute value of difference |S1-S3| smaller to decrease the sensitivity of detecting the motion. Therefore, even in the case where there is a large difference in the quantization scale value between adjacent GOPs, likely causing a disorder in the progressive scan conversion output image at the sensitivity of directly detecting the motion, it is determined to be closer to the still image by decreasing the sensitivity of detecting the motion depending on the difference in the quantization scale value between adjacent GOPs, whereby it is possible to prevent a disorder in the progressive scan conversion output image, and produce the excellent progressive scan conversion image.

### Second Embodiment

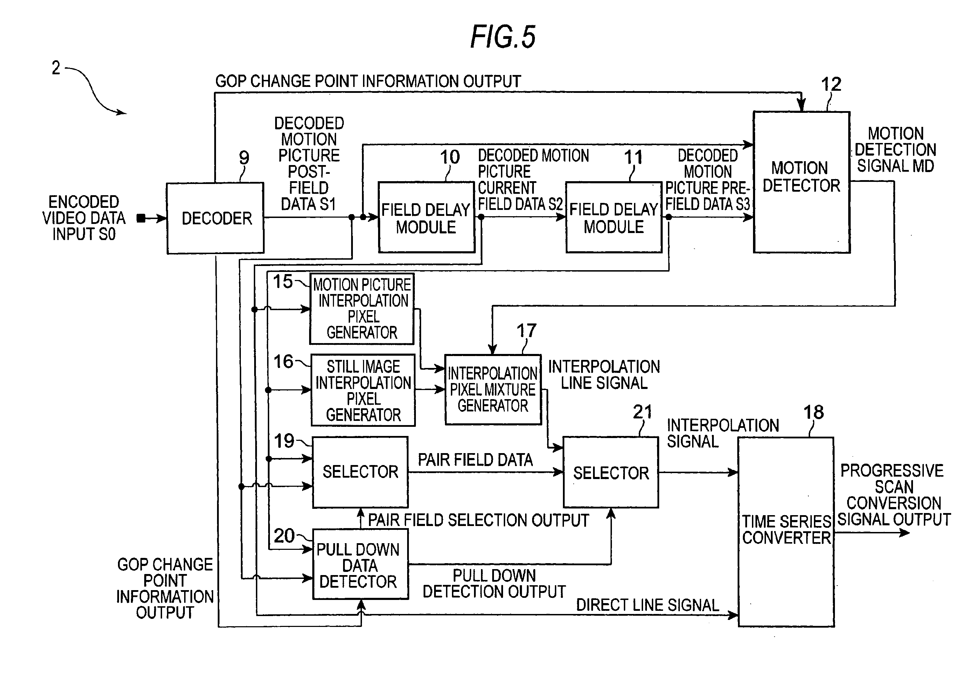

Referring to Fig. 5, a progressive scan conversion device according to a second embodiment will be described below. The progressive scan conversion device 2 as shown in Fig. 5 includes the selectors 19 and 21, and a pull down data detector (pull down detection module) 20, in addition to the configuration of the progressive scan conversion device 1 as previously described. The progressive scan conversion device 2 of this embodiment converts a video signal of 24 frames per second, generated based on a movie film picture or the like, into a video signal of 30 frames per second (60 fields per second) in accordance with a 2-3 pull down method to detect a pull down data that is the video signal of an interlaced scanning method, thereby making the progressive scan conversion.

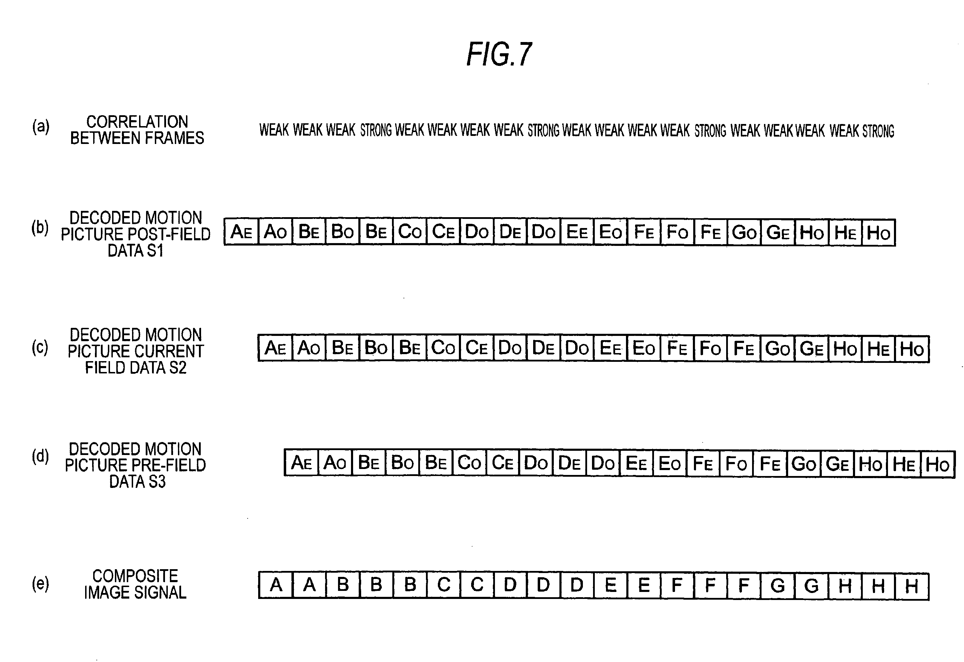

Fig. 7 shows how to process the 2-3 pull down data of interlaced scanning. Section (b) in Fig. 7 shows the decoded motion picture post-field data S1 that is the input 2-3 pull down data. The fields labeled "Ae" are even-number (even) field generated based on one frame "A" such as a video film and the fields labeled "Ao" are the odd-number (odd) field generated based on one frame A such as a movie film. The fields labeled "Be" are the even-number (even) field generated based on one frame "B" such as a video film and the fields labeled "Bo" are the odd-number (odd) field generated based on one frame "B" such as a movie film. The fields labeled "Ce," "Co" and the like are as with those described above. Section (c) in Fig. 7 shows the decoded motion picture current field data S2 with delay of one field in which the signal shown in section (b) in Fig. 7 is delayed by one field. Section (d) in Fig. 7 shows the decoded motion picture pre-field data S3 in which the signal shown in section (c) in Fig. 7 is further delayed by one field. Section (a) in Fig. 7 shows the inter-frame correlation between the decoded motion picture post-field data S1 and the decoded motion picture pre-field data S3, and section (e) in Fig. 7 shows a progressive scan converted image signal in which these signals are superposed.

Referring back to Fig. 5, the pull down data detector 20 detects whether or not the decoded motion picture post-field data S1 and the decoded motion picture pre-field data S3 are the pull down data based on the decoded motion picture post-field data S1, the decoded motion picture pre-field data S3 and the GOP change point information output, and generates a pull down detection output and a pair field selection output.

The selector 19 selects any one of the decoded motion picture post-field data S1 and the decoded motion picture pre-field data S3 as the field to be paired with the decoded motion picture current field data S2 in accordance with the pair field selection output, and outputs the selection result as the pair field selection output to a selector 21. The selector 21 selects the pair field data if the pull down detection output indicates the pull down data, or selects the interpolation line signal if the pull down detection output does not indicate the pull down data, and outputs the selected signal as the interpolation signal. The time series converter 18 arranges (synthesizes) the interpolation signal and the decoded motion picture current field data S2 that is the direct signal in progressive scan order to generate the progressive scan conversion output.

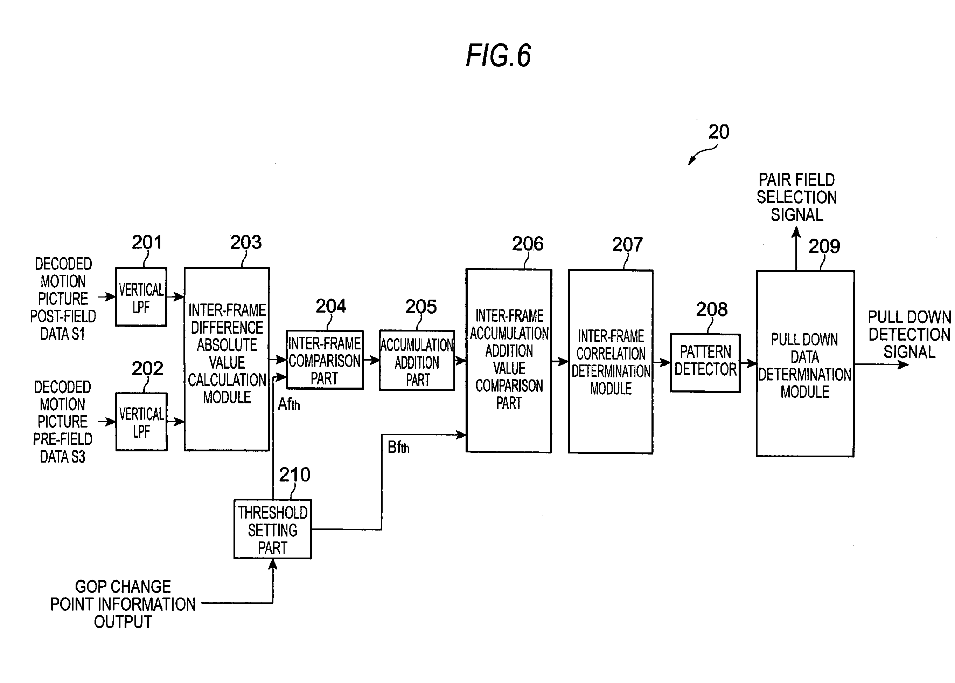

Fig. 6 is a diagram showing the configuration of the pull down data detector of Fig. 5. The decoded motion picture post-field data S1, after passing through a vertical LPF 201, is input into an inter-frame difference absolute value calculation module 203. The decoded motion picture pre-field data S3, after passing through the vertical LPF 202, is input into the inter-frame difference absolute value calculation module 203.

The inter-frame difference absolute value calculation module 203 calculates the absolute value of difference between the decoded motion picture post-field data S1 and the decoded motion picture pre-field data S3 for each pixel or small area. This absolute value of difference is used to obtain the inter-frame correlation between two input signals.

A threshold setting part 210 sets a threshold Afₜₕ and a threshold Bfₜₕ to be larger, based on the GOP change point information output, when the GOP change point information output indicates the video data belonging to the different GOP, than when the GOP change point information output indicates the video data belonging to the same GOP.

An output signal of the inter-frame difference absolute value calculation module 203 is input into an inter-frame comparison part 204, and compared with the threshold Afₜₕ set by the threshold setting part 210 for each small area (or each pixel). This result is added and accumulated by an accumulator adder 205 for a period of one field, and input into the inter-frame accumulation addition value comparison part 206. The inter-frame accumulation addition value comparison part 206 compares the input from the accumulator adder 205 with the threshold Bfₜₕ set by the threshold setting part 210 for each field period, and outputs the comparison result to an inter-frame correlation determination module 207. The inter-frame correlation determination module 207 determines whether the inter-frame correlation is "strong" or "weak" from the comparison result, as shown in section (a) in Fig. 7.

A pattern detector 208 detects whether the inter-field correlation result of a plurality of fields, for example, consecutive five fields, is matched with a pattern peculiar to pull down data such as the 2-3 pull down data or 2-2 pull down data, as shown in Fig. 7. A pull down data determination module 209 determines whether the input signal is the pull down data such as the 2-3 pull down data or 2-2 pull down data, based on whether or not the detection result of inter-frame pattern by the pattern detector 208 satisfies the pull down data condition in the period of a predetermined number of fields.

A determination result of whether or not the input signal is the pull down data is output as the pull down detection signal from the pull down data determination module 209. If the field data input into the device is the pull down data, a pair field selection signal indicating whether the field to be paired with the decoded motion picture current field data S2 is the decoded moving image pre-field data S1 or the decoded moving image post-field data S3 is output. In this embodiment, the inter-field correlation, not the inter-frame correlation, may be employed for making the determination as to whether or not the input signal is the pull down data.

In this embodiment, the pull down data detector 20 increases the threshold Afₜₕ and threshold Bfₜₕ for determining the correlation to be stronger when determining the degree of inter-frame correlation with the video data belonging to the different GOP, based on the GOP change point information output from the decoder 9, than when determining the degree of inter-frame correlation with the video data belonging to the same GOP. Therefore, since the sensitivity of detecting the inter-frame correlation at the GOP change point is decreased, it is possible to prevent a disorder in the progressive scan conversion output image at the GOP change point, thereby producing the excellent progressive scan conversion image.

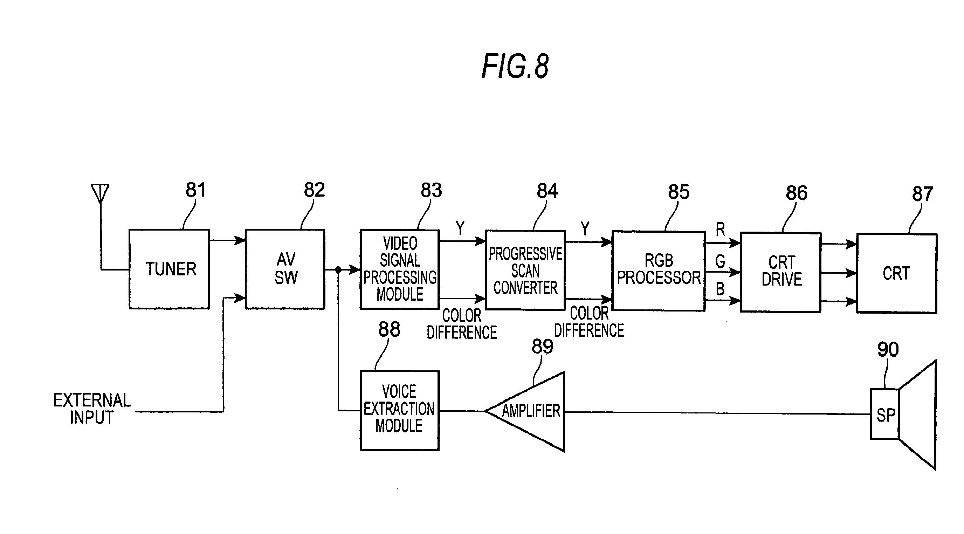

Fig. 8 is a block diagram showing one example of a television apparatus (display device) using the progressive scan conversion device according to the embodiment. The television apparatus shown in Fig. 8 is provided with a tuner 81 for demodulating a broadcast signal supplied via an antenna element to output a video audio signal, an AV switch circuit 82 for switching between the supplied video audio signal and an external input, and a video signal processing module 83 for performing a predetermined video signal process to convert the supplied video signal into Y signal and color difference signal for output. The television apparatus is also provided with a voice extraction module 88 for extracting the voice signal from the video audio signal and an amplifier 89 for appropriately amplifying the voice signal to be supplied to a speaker 90.

Herein, a progressive scan conversion processing module 84 to which the video signal is supplied from the video signal processing module 83 can apply the progressive scan conversion devices 1 and 2 as described above. The non-interlaced video signal is separated into RGB signals by an RGB processor 85, appropriately amplified in power by a CRT drive 86 and displayed as the video on a CRT 87.

As described above with reference to the embodiments, there is provided a progressive scan conversion device and a method for performing progressive scan conversion that are capable of suppressing a disorder in the output image of progressive scan conversion from the image using the MPEG.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A progressive scan conversion device comprising:
a decoding module configured to decode a video data encoded by a video encoding method having a GOP structure;
a GOP information output module configured to output information regarding a GOP to which the video data decoded by the decoding module belongs;
a motion detection module configured to detect a motion between fields or between frames for each pixel with the video data decoded by the decoding module to output a motion detection signal indicating a degree of the motion to be in a range from a still picture determination to a motion picture determination;
a still image interpolation pixel generation module configured to generate a still image interpolation pixel;
a motion picture interpolation pixel generation module configured to generate a motion picture interpolation pixel; and
an interpolation pixel mixture generation module configured to generate a mixture of the still image interpolation pixel and the motion picture interpolation pixel while increasing the ratio of the still image interpolation pixel as the degree of the motion indicated by the motion detection signal transitions toward the still picture determination and while increasing the ratio of the motion picture interpolation pixel as the degree of the motion indicated by the motion detection signal transitions toward the motion picture determination,
wherein the motion detection module refers to the information output by the GOP information output module and outputs the motion detection signal indicating the degree of the motion more toward the still picture determination in a case where detecting the motion between fields or between frames of pixel for the video data belonging to different GOP than in a case where detecting the motion between fields or between frames of pixel for the video data belonging to the same GOP.

2. The device of Claim 1, wherein the motion detection module outputs the motion detection signal indicating the degree of the motion more toward the still picture determination as a difference in quantization scale value between fields or between frames for the video data belonging to an adjacent GOP is larger.

3. The device of Claim 2, wherein the motion detection module outputs the motion detection signal indicating the degree of the motion more toward the still picture determination as the difference in the quantization scale value between I pictures for the video data belonging to the adjacent GOP is larger.

4. The device of Claim 1, wherein the motion detection module sets a larger threshold for the motion detection signal to be toward the motion picture determination in a case where detecting the motion between fields or between frames of pixel for the video data belonging to different GOP than in a case where detecting the motion between fields or between frames of pixel for the video data belonging to the same GOP.

5. The device of Claim 1, wherein the motion detection module sets a smaller gradient for the motion detection signal to be toward the motion picture determination in a case where detecting the motion between fields or between frames of pixel for the video data belonging to different GOP than in a case where detecting the motion between fields or between frames of pixel for the video data belonging to the same GOP.

6. The device of Claim 1, wherein the still image interpolation image generation module generates the still image interpolation pixel from pre-field data or post-field data of the video data, and
wherein the motion picture interpolation image generation module generates the motion picture interpolation pixel from current field data, the pre-field data or the post-field data of the video data.

7. The device of Claim 1 further comprising a pull down detection module configured to determine the correlation between fields or between frames with the video data decoded by the decoding module and detect whether the video data is a pull down data or not based on the determined correlation,
wherein the pull down detection module sets a larger threshold for determining that the correlation is strong in a case where detecting the motion between fields or between frames of pixel for the video data belonging to different GOP than in a case where detecting the motion between fields or between frames of pixel for the video data belonging to the same GOP.

8. The device of Claim 1 further comprising a display device configured to display an image based on the mixture of the still image interpolation pixel and the motion picture interpolation pixel generated by the interpolation pixel mixture generation module.

9. A method for performing progressive scan conversion, the method comprising:
decoding a video data encoded by a video encoding method having a GOP structure;
outputting information regarding a GOP to which the decoded video data belongs;
detecting a motion between fields or between frames for each pixel with the decoded video data to output a motion detection signal indicating a degree of the motion to be in a range from a still picture determination to a motion picture determination;
generating a still image interpolation pixel;
generating a motion picture interpolation pixel;
generating a mixture of the still image interpolation pixel and the motion picture interpolation pixel while increasing the ratio of the still image interpolation pixel as the degree of the motion indicated by the motion detection signal transitions toward the still picture determination and while increasing the ratio of the motion picture interpolation pixel as the degree of the motion indicated by the motion detection signal transitions toward the motion picture determination; and
outputting, by referring to the information regarding the GOP, the motion detection signal indicating the degree of the motion more toward the still picture determination in a case where detecting the motion between fields or between frames of pixel for the video data belonging to different GOP than in a case where detecting the motion between fields or between frames of pixel for the video data belonging to the same GOP.
